# EUROPEAN PATENT SPECIFICATION

(11) **EP 2 301 197 B1**
(45) Date of publication and mention of the grant of the patent: **09.11.2011**
(21) Application number: 08768838.8
(22) Date of filing: 27.06.2008
(51) Int. Cl.: H04L 12/24

(54) **MESSAGE MANAGEMENT AND SUPPRESSION IN A MONITORING SYSTEM**
NACHRICHTENVERWALTUNG UND UNTERDRÜCKUNG IN EINEM ÜBERWACHUNGSSYSTEM
GESTION ET SUPPRESSION DE MESSAGES DANS UN SYSTÈME DE SURVEILLANCE

(43) Date of publication of application: 30.03.2011
(73) Proprietor: Thomson Licensing, 92130 Issy-les-Moulineaux (FR)
(72) Inventor: RODRIGUES, Northon, Oregon City, Oregon 97045 (US); SPENCER, Travis, Beaverton, Oregon 97006 (US)
(74) Representative: Rittner, Karsten
(86) International application number: PCT/US2008/008080
(87) International publication number: WO 2009/157906

(56) References cited:
- US-A- 6 124 790
- US-A1- 2004 044 929
- US-A1- 2008 154 832
- US-B1- 6 239 699

## Description

### TECHNICAL FIELD

The present invention generally relates to computerized monitoring systems, and more particularly, to a system and method for managing and suppressing messages received from monitored devices in a monitoring system to reduce excess, redundant messages from being processed by the system.

### BACKGROUND

Monitoring systems, e.g., network monitoring systems constantly monitor a computer network for slow or failing system components or modules to ensure that the network system or facility runs at optimal levels, and notify the administrator in case of problems in a facility such as email outages, power supply failures, slow network, or other alarm conditions in a facility. Network monitoring is a vital function in network management. Exemplary networks in which such monitoring might be desirable can include any type of computer network, such as Local Area Network (LAN).

When performing any type of monitoring, the system can set up a test message or HTTP request to be retrieved to determine the status of the server. What is measured is the response time and availability in the network, as well as the reliability and consistency of that network. There are many tools and software that have automated aspects of network monitoring. For example, in case of a timeout or when a network connection cannot be established usually there is an alert given by the system. An alarm can sound or a message can be sent to the proper authority, e.g., a central monitoring computer. Simple Network Management Protocol (SNMP) is a protocol governing network management and the monitoring of network devices and their functions. SNMP is used in network management systems to monitor network attached devices for problem conditions. It is not necessarily limited to TCP/IP networks. Most monitoring systems contain logs listing messages detailing all the actions and functions of the network and its connected components so that the network administrator can review it in case there are unexpected problems to determine the cause of those problems.

However, when using monitoring systems, users are often faced with a barrage of messages, many of which are not meaningful, important or necessary, or are redundant. Thousands of repeated messages can be generated, which fills up databases and slows does the overall monitoring system, thus rendering the monitoring system ineffective. The numerous messages can further distract from, impede and sometimes hide the genuinely important and relevant messages outlining issues and problems which must be addressed. Exemplary ways to handle this problem include simply turning off or suppressing broad categories of messages from being displayed, which might run the risk of losing important relevant data and the user not being alerted to a genuine problem in the system. On the other hand, if message suppression is turned off, the log files can lose a great deal of important data because the needed information was overwritten.

US 2004/044929 A1 discloses a fault information collection program which determines redundancy of information related to an identical fault and storing new fault information only if a messaging interval has elapsed.

### SUMMARY

In one embodiment according to the present principles, a system and method is provided for suppressing and, thus, reducing the number of messages displayed to a monitoring user in a monitoring system while ensuring effective notification to a user of any problems/issues in the system in need of resolution. In addition, the user is provided with the ability to view a trail of messages from each device. Thus, efficiency in system monitoring is improved, while unnecessary, redundant or superfluous messages are reduced or eliminated, and users can be provided with a history and view of the rate in which messages are being generated by a monitored device(s). Such is achieved via a logarithmic suppression method in which the user is able to observe the frequency of messages coupled with the suppression. A system and method according to the present principles can be applied to SNMP and/or non-SNMP message suppression.

In one aspect of the present principles, a method for suppressing messages in a monitoring system is provided comprising the steps of determining if an incoming message matches any existing message stored in the monitoring system, and increasing a Suppression Interval (SI) exponentially for each same incoming message received at an Event Time which is within a time limit.

According to another aspect, a system for suppressing and managing messages is provided comprising a monitoring module including a message listener configured for receiving messages from monitored modules, and a suppression module configured for determining if an incoming message matches any existing message stored in the monitoring system and increasing a Suppression Interval (SI) exponentially for each same incoming message received at an Event Time which is within a time limit.

These and other aspects, features and advantages of the present principles will be described or become apparent from the following detailed description of the preferred embodiments, which is to be read in connection with the accompanying drawings.

### BRIEF DESCRIPTION OF THE DRAWINGS

In the drawings, wherein like reference numerals denote similar elements throughout the views:
FIG. 1 is a block diagram of an exemplary message suppression system setup according to an aspect of the present principles; and
FIG. 2 is a flow diagram of an exemplary method for suppressing messages according to an aspect of the present principles.

It should be understood that the drawings are for purposes of illustrating the concepts of the present principles and are not necessarily the only possible configurations for illustrating the present principles.

### DETAILED DESCRIPTION

A method, apparatus and system for managing and suppressing messages in a monitoring system is advantageously provided according to various aspects of the present principles. Although the present principles will be described primarily within the context of a monitoring system and method, the specific embodiments of the present principles should not be treated as limiting the scope of the invention. It will be appreciated by those skilled in the art and informed by the teachings of the present principles that the concepts of the present principles can be advantageously applied in any other environment in which a computer-related monitoring function is desired.

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future (i.e., any elements developed that perform the same function, regardless of structure).

Thus, for example, it will be appreciated by those skilled in the art that any block diagrams presented herein represent conceptual views of illustrative system components and/or circuitry embodying the principles of the invention. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

Advantageously, according to one aspect of the present principles, a system and method for managing and suppressing messages in a network monitoring system with improved efficiency and accuracy is heretofore provided. The system and method according to the present principles can advantageously be incorporated and utilized in any network in need of monitoring actions, such as e.g., performance or security monitoring.

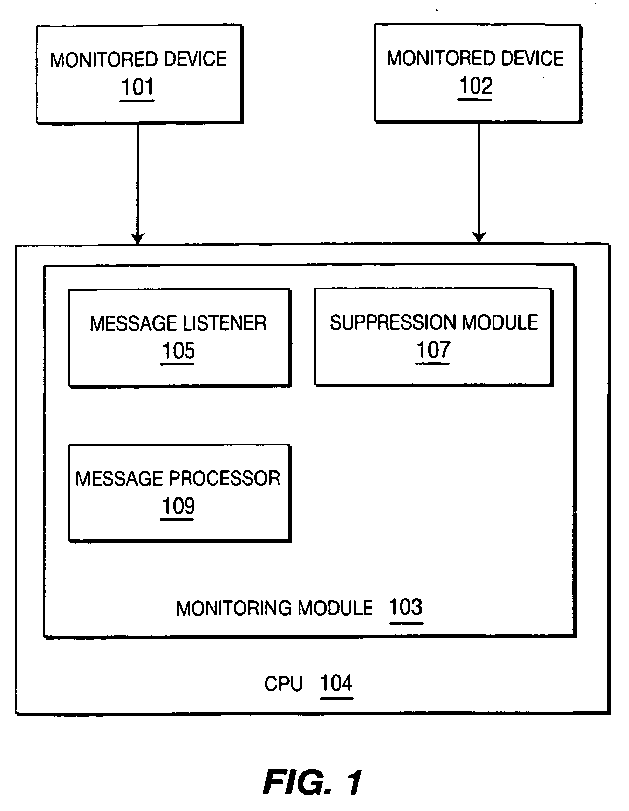

Referring now to the Figures, FIG. 1 is a block diagram of an exemplary message management and suppression system setup according to an aspect of the present principles. A monitoring device 104 can be provided embodied, for example, in a CPU (central processing unit), e.g., the central unit in a computer having the logic circuitry that performs the instructions of a computer's programs. The monitoring device/CPU 104 can be connected to user interface devices, such as a display and keyboard/mouse, etc. and further includes a monitoring module 103 according to an aspect of the present principles configured for performing message management and suppression functions.

The monitoring module 103 preferably includes at least a message listener 105, a suppression module 107, and a message processor 109, and is configured to communicate with any device 101, 102 which is desired to be monitored. Monitored devices can be connected via a network which can comprise, e.g., any type of computer network, such as a local area network (LAN). Generally, the monitoring module 103 is configured to monitor, detect, manage and suppress messages from monitored modules.

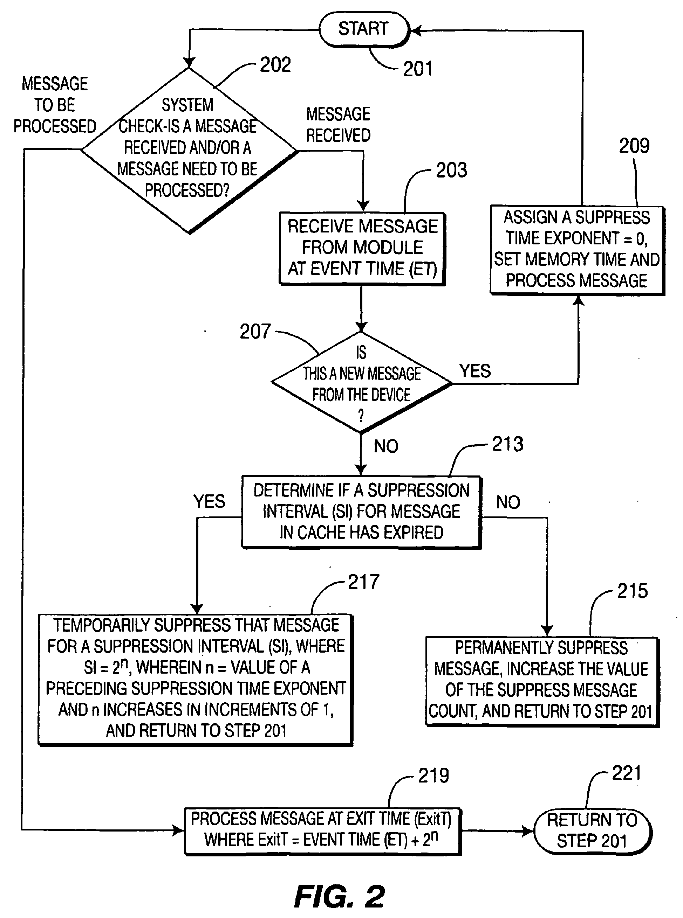

The functions of the various components of the monitoring module 103 will be further discussed with respect to Table 1 and FIG. 2.

Exemplary definitions for terms used in this disclosure are as follows:
*Entry Time (EntT):* This is the current system time at which a message is received at a monitoring module (e.g., entered into a hash table).
*Suppression Time Exponent:* value of the power in which the Suppression Interval is increased. This value starts at 0 and increases in increments of 1.
*Suppression Interval (SI):* This is the interval within which if the same message is received then it will be suppressed. This interval is adjusted if the same message (from the same device) is continuously received by the monitoring module, depending on the frequency of the message. That is, e.g., this interval will be increased exponentially by a power of 2 if the same message is received within a Memory Time (before a Memory Time period has expired) and after any preceding suppression interval has expired. The suppression interval will follow the formula 2n, wherein n = value of a preceding Suppression Time Exponent.
*Suppression Count (SC):* The number of suppressed messages for a particular suppression interval. When the suppression interval changes, the suppression count starts again from zero.
*Memory Time (MT):* This comprises the period of time a message will be stored or 'remembered' in the system (e.g., a hash table). In one embodiment, the MT can be set to a default value. For example, a default MT can be 32 seconds from the Entry Time. The default MT time can be user specified and changed if desired.
*Exit Time (ExitT):* This is the time at which the current suppression time will end and if any messages have been suppressed during this interval, then a message has to be sent for processing with the suppression count. In other words, this is the time until which a message will be put on hold to see if the same messages are received. The message will be forwarded for processing at the exit time with the count of suppressed messages in a particular suppression interval.

Advantageously, the monitoring module 103 provides a message suppression feature which also provides the user with a history and view of the rate in which messages are being generated by monitored modules. This solves the problem of processing thousands of repeated messages filling up databases, which would slow down the overall monitoring system and render the monitoring system ineffective. A system and method according to the present principles also provides a mechanism to deal with bursts of messages, thus reducing their impact on the monitoring of any other elements in the system.

This is achieved via a logarithmic message suppression algorithm in which certain messages or 'traps' are suppressed for intervals of time (`Suppression Intervals'), wherein the Suppression Interval is increased exponentially if a same message is received within certain time limits, i.e., before expiration of a Memory Time (MT) and after a previous Suppression Interval (SI) has expired. A 'same message' can comprise an identical message received from a particular monitored module.

According to one aspect, incoming messages are initially compared to a look-up table or hash table to see if a same message exists. If so, the message can be suppressed in accordance with a suppression algorithm according to the present principles. Thus, not all messages are processed by the system, saving system resources and time, and preventing system slowdowns and filled-up databases. The process of using the hash table to manage and determine the suppression of messages is comparatively much more efficient and faster than processing all the incoming messages.

The following Table 1 depicts an exemplary application of the suppression algorithm in an instance where the same message is being received from a monitored device once every second for 36 seconds. Here, the Memory Time has been set to an exemplary default time of 32 seconds for illustrative purposes.

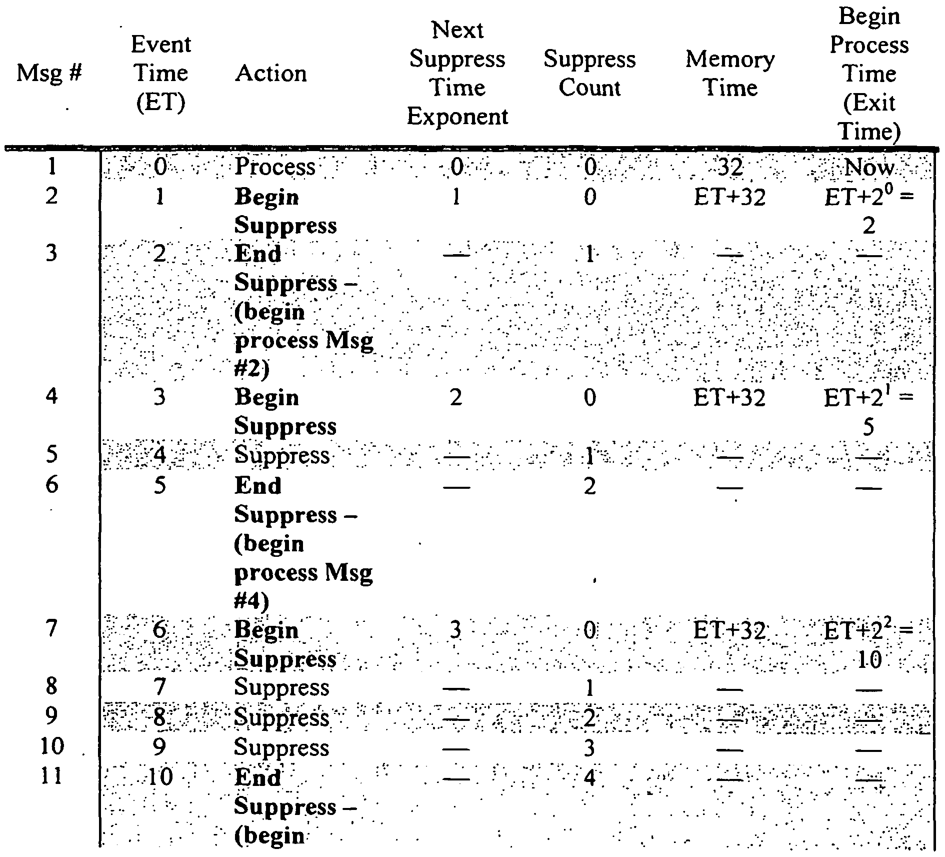

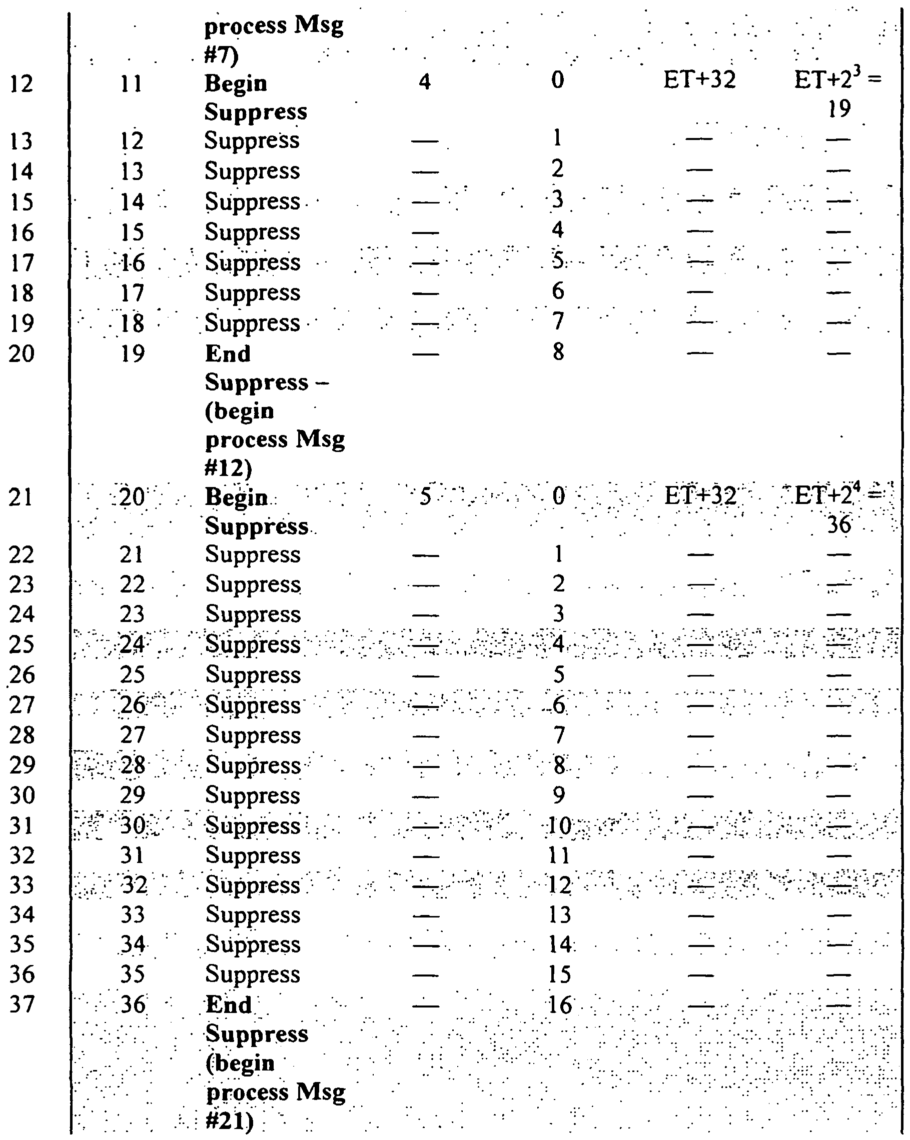

When a message is received for the first time (a new message is received from a monitored device) the Suppression Interval is 0 seconds. That is, at Event Time 0 and Msg 1 is received and is immediately processed (Begin Process Time is "now"), since it is the first message ever received from the device and has not yet been processed before.

If the same message is received within the Memory Time, the Suppression Interval will be 1 second (SI = 2⁰). Any message received within 1 second (2⁰) will now be suppressed (as the Suppression Interval = 1). If the same message is received again after the Suppression Interval (1 second) has elapsed, then the Suppression Interval will be reset to 2 seconds (2¹) and so on and so forth. Hence, the Suppression Interval (SI) will follow the formula SI = 2ⁿ where n is the number of messages received which are not suppressed. The value of n increases in increments of 1. Any messages received within the period of 2ⁿ will be suppressed.

The Memory Time (MT) is the period of time in which a message will remain/be stored in a hash table before it is deleted. The Memory Time is configurable by a user (a user can enter any desired value) or a default time can be used. The Memory Time also implies the maximum suppression interval supported. When a message is received for the first time from a monitored device, the Memory Time will be set to a user-defined or default value (e.g., here, 32 secs from the current monitoring module time) and the message will be added to the hash table or map. The message would be sent for further processing. Once the Memory Time is elapsed, that message will be removed from the hash table. If the same message is received again while the old message is already in the hash table, the Memory Time will be set to Entry Time + default MT + Suppression Interval (SI). Any message which is suppressed will also change the MT to: Entry Time + default MT + Suppression Interval.

The Suppress Time Exponent is increased in increments of 1 at the end of each Suppression Interval. Each Suppression Interval in Table 1 can comprise Event Time 1-2 seconds; 3-5 seconds; 6-10 seconds; 11-19 seconds and 20-36 seconds.

The Suppress Count is the number of suppressed messages for a particular Suppression Interval (SI). For example, for each of the 5 Suppression Intervals shown in Table 1, the number of suppressed message respectively is: 1, 2, 4, 8, and 16. In Table 1, the total number of messages which are processed (messages displayed to the user) in 36 seconds is 6 messages.

Table 2 below illustrates another overview of how messages are suppressed, given the same example in which the incoming rate of same messages is 1 per second.

| **Suppression Interval (seconds)** | **Comments** |
|---|---|
| 0 | Trap Processed right away |
| 1(2⁰) | Trap Processed with a delay of 1 second |
| 2 (2¹) | 2 msgs suppressed - 1 msg displayed to the user |
| 4 (2²) | 4 msgs suppressed - 1 msg displayed to the user |
| 8 (2³) | 8 msgs suppressed - 1 msg displayed to the user |
| 16 (2⁴) | 16 msgs suppressed -1 msg displayed to the user |
| 32 (2⁵) | 32 msgs suppressed - 1 msg displayed to the user |
| 64 (2⁶) | 64 msgs suppressed - 1 msg displayed to the user |
| 128 (2⁷) | 128 msgs suppressed - 1 msg displayed to the user |
| 256 (2⁸) | 256 msgs suppressed - 1 msg displayed to the user |
| 512 (2⁹) | 512 msgs suppressed - 1 msg displayed to the user |
| 1024 (2¹⁰) | 1024 msgs suppressed - 1 msg displayed to the user |
| 2048 (2¹¹) | 2048 msgs suppressed - 1 msg displayed to the user |
| 4096 (2¹²) | 4096 msgs suppressed - 1 msg displayed to the user |

FIG. 2 is a block diagram of an exemplary method flow for message management and suppression in a monitoring system according to an aspect of the present principles. For explanatory purposes, the steps of FIG. 2 will be discussed in view of the system of FIG. 1.

After Start 201, a system check is performed (step 202) in which it is determined whether any messages have been received from monitored module(s) and/or if there are any messages which are waiting or need to be processed. If a message is determined to be incoming, the message is received from a monitored device at an Event Time (ET) (step 203). If a message is waiting to be processed, the message is processed at a Begin Process Time or Exit Time, wherein Exit Time = Event Time (ET) + 2". After processing, the process returns to step 201 (step 221).

After step 203, decision block 207 is performed in which it is determined whether the message received is a new message from the monitored device. If yes, a Suppress Time Exponent of 0 is assigned, a Memory Time (MT) is set (e.g., to any desired value or a default value), and the message is processed (step 209). The process goes back to step 201. The Suppress Time Exponent value will typically be set to 0 for each new or different message received from a device.

If the message is not a new message, it is determined if a Suppression Interval for messages in cache has expired (step 213). If yes, the incoming message is suppressed temporarily for a Suppression Interval (SI), where SI = 2", wherein n = the value of a directly preceding Suppression Time Exponent, and n increases in increments of 1 at the expiration of each Suppression Interval (step 217).

If at the time of an incoming message a previous Suppression Interval has not yet expired, the incoming message is permanently suppressed (i.e., deleted), the Suppress Count value is increased and the process returns to step 201. Messages which permanently suppressed are not processed by the system, thus saving system resources.

Although the embodiment which incorporates the teachings of the present principles has been shown and described in detail herein, those skilled in the art can readily devise many other varied embodiments that still incorporate these teachings. Having described preferred embodiments for a system and method for message management and suppression in a monitoring system (which are intended to be illustrative and not limiting), it is noted that modifications and variations can be made by persons skilled in the art in light of the above teachings. It is therefore to be understood that changes can be made in the particular embodiments of the present principles disclosed which are within the scope of the appended claims. Having thus described the present principles with the details and particularity required by the patent laws, what is claimed and desired protected is set forth in the appended claims.

## Claims

1. A method, comprising the steps of:
determining if an incoming message matches an existing message stored in a system;
increasing a message suppression interval (SI) exponentially for each same incoming message received at an event time which is within a time limit, wherein the message suppression interval starts when a message is received a first time and suppresses a same message received thereafter.

2. The method of claim 1, further comprising the step of:
storing the existing message in the system for a memory time.

3. The method of claim 2, further comprising the step of:
removing the existing message from storage on the system when its memory time is elapsed.

4. The method of claim 2, further comprising the step of:
defining the time limit as being within the memory time of a previous same message and after any previous suppression interval has expired.

5. The method of claim 4, further comprising the step of:
permanently suppressing an incoming message received within an unexpired suppression interval.

6. The method of claim 5, further comprising the step of:
increasing a value of a suppress message count by one for each message permanently suppressed.

7. The method of claim 1, wherein if the incoming message does not match any existing message stored in the monitoring system, further comprising the steps of:
assigning a suppress time exponent = 0 and processing the message.

8. The method of claim 2, further comprising the step of:
temporarily suppressing each same message received within the time limit for a suppression interval (SI) = 2ⁿ, wherein n = value of a preceding suppression time exponent.

9. The method of claim 8, further comprising the step of:
increasing n in increments of one for each same incoming message received within the memory time of a matching message and after any previous suppression interval has expired.

10. The method of claim 8, further comprising the step of:
processing each temporarily suppressed message at an exit time, wherein exit time = event time + 2ⁿ.

11. A system, comprising:
a monitoring module including a message listener configured for receiving messages from monitored modules;
a suppression module configured for determining if an incoming message matches any existing message stored in the monitoring system and increasing a suppression interval (SI) exponentially for each same incoming message received at an event time which is within a time limit, wherein the suppression interval starts when a message is received a first time and suppresses a same message received thereafter.

12. The system of claim 11, wherein the existing message is stored in the monitoring module for a memory time.

13. The system of claim 12, wherein the existing message is removed from storage on the monitoring module when its memory time is elapsed.

14. The system of claim 12, wherein the time limit is defined as being within the memory time of a previous same message and after any previous suppression interval has expired.

15. The system of claim 14, wherein any incoming message received within an unexpired suppression interval is permanently suppressed.

## Patentansprüche

1. Verfahren, das die folgenden Schritte umfasst:
Bestimmen, ob eine ankommende Nachricht mit einer in einem System gespeicherten vorhandenen Nachricht übereinstimmt;
exponentielles Erhöhen eines Nachrichtunterdrückungsintervalls (SI) für jede ankommende selbe Nachricht, die zu einer Ereigniszeit empfangen wird, die innerhalb eines Zeitgrenzwerts liegt, wobei das Nachrichtunterdrückungsintervall beginnt, wenn eine Nachricht zum ersten Mal empfangen wird, und eine danach empfangene selbe Nachricht unterdrückt.

2. Verfahren nach Anspruch 1, das ferner den folgenden Schritt umfasst:
Speichern der vorhandenen Nachricht in dem System für eine Speicherzeit.

3. Verfahren nach Anspruch 2, das ferner den folgenden Schritt umfasst:
Entfernen der vorhandenen Nachricht aus dem Speicher in dem System, wenn die Speicherzeit abgelaufen ist.

4. Verfahren nach Anspruch 2, das ferner den folgenden Schritt umfasst:
Definieren des Zeitgrenzwerts als innerhalb der Speicherzeit einer vorhergehenden selben Nachricht und nachdem irgendein vorhergehendes Unterdrückungsintervall abgelaufen ist liegend.

5. Verfahren nach Anspruch 4, das ferner den folgenden Schritt umfasst:
dauerhaftes Unterdrücken einer ankommenden Nachricht, die innerhalb eines nicht abgelaufenen Unterdrückungsintervalls empfangen wird.

6. Verfahren nach Anspruch 5, das ferner den folgenden Schritt umfasst:
Erhöhen eines Werts eines Unterdrückungsnachrichten-Zählwerts um eins für jede dauerhaft unterdrückte Nachricht.

7. Verfahren nach Anspruch 1, bei dem das Verfahren, wenn die ankommende Nachricht nicht mit irgendeiner in dem Überwachungssystem gespeicherten vorhandenen Nachricht übereinstimmt, ferner die folgenden Schritte umfasst:
Zuweisen eines Unterdrückungszeitexponenten = 0 und Verarbeiten der Nachricht.

8. Verfahren nach Anspruch 2, das ferner den folgenden Schritt umfasst:
vorübergehendes Unterdrücken jeder selben Nachricht, die innerhalb des Zeitgrenzwerts für ein Unterdrückungsintervall (SI) = 2ⁿ empfangen wird, wobei n = der Wert eines vorhergehenden Unterdrückungszeitexponenten ist.

9. Verfahren nach Anspruch 8, das ferner den folgenden Schritt umfasst:
Erhöhen von n in Inkrementen von eins für jede selbe ankommende Nachricht, die innerhalb der Speicherzeit einer übereinstimmenden Nachricht und nachdem irgendein vorhergehendes Unterdrückungsintervall abgelaufen ist empfangen wird.

10. Verfahren nach Anspruch 8, das ferner den folgenden Schritt umfasst:
Verarbeiten jeder vorübergehend unterdrückten Nachricht bei einer Austrittszeit, wobei Austrittszeit = Ereigniszeit + 2ⁿ ist.

11. System, das umfasst:
ein Überwachungsmodul, das einen Nachrichtenempfänger enthält, der zum Empfangen von Nachrichten von überwachten Modulen konfiguriert ist;
ein Unterdrückungsmodul, das zum Bestimmen, ob eine ankommende Nachricht mit einer in dem Überwachungssystem gespeicherten vorhandenen Nachricht übereinstimmt, und zum exponentiellen Erhöhen eines Unterdrückungsintervalls (SI) für jede ankommende selbe Nachricht, die zu einer Ereigniszeit empfangen wird, die innerhalb eines Zeitgrenzwerts liegt, wobei das Unterdrückungsintervall beginnt, wenn eine Nachricht zum ersten Mal empfangen wird, und eine danach empfangene selbe Nachricht unterdrückt, konfiguriert ist.

12. System nach Anspruch 11, bei dem die vorhandene Nachricht für eine Speicherzeit in dem Überwachungsmodul gespeichert wird.

13. System nach Anspruch 12, bei dem die vorhandene Nachricht aus dem Speicher in dem Überwachungsmodul entfernt wird, wenn die Speicherzeit abgelaufen ist.

14. System nach Anspruch 12, bei dem der Zeitgrenzwert als innerhalb der Speicherzeit einer vorhergehenden selben Nachricht und nachdem irgendein vorhergehendes Unterdrückungsintervall abgelaufen ist liegend, definiert ist.

15. System nach Anspruch 14, bei dem irgendeine innerhalb eines nicht abgelaufenen Unterdrückungsintervalls empfangene ankommende Nachricht dauerhaft unterdrückt wird.

## Revendications

1. Procédé, comprenant les étapes suivantes :
détermination de l'éventuelle correspondance entre un message entrant et un message existant stocké dans un système ;
augmentation d'un intervalle de suppression de message (SI) exponentiellement pour chaque message entrant identique reçu à un temps d'évènement qui se trouve dans une limite temporelle, où l'intervalle de suppression du message démarre lorsqu'un message est reçu pour la première fois et supprime un message identique reçu par la suite.

2. Procédé selon la revendication 1, comprenant en outre l'étape suivante :
stockage du message existant dans le système pendant un temps de mémorisation.

3. Procédé selon la revendication 2, comprenant en outre l'étape suivante :
suppression du message existant du stockage du système lorsque son temps de mémorisation est écoulé.

4. Procédé selon la revendication 2, comprenant en outre l'étape suivante :
définition de la limite temporelle comme étant comprise dans le temps de mémorisation d'un message précédent identique et après expiration d'un quelconque intervalle de suppression précédent.

5. Procédé selon la revendication 4, comprenant en outre l'étape suivante :
suppression permanente d'un message entrant reçu dans un intervalle de suppression non expiré.

6. Procédé selon la revendication 5, comprenant en outre l'étape suivante :
augmentation d'une unité d'une valeur d'un compteur de messages de suppression pour chaque message supprimé de façon permanente.

7. Procédé selon la revendication 1 qui, si le message entrant ne correspond à aucun message existant stocké dans le système de surveillance, comprend en outre les étapes suivantes :
attribution d'un exposant de temps de suppression = 0 et traitement du message.

8. Procédé selon la revendication 2, comprenant en outre l'étape suivante :
suppression temporaire de chaque message identique reçu dans la limite temporelle pour un intervalle de suppression (SI) = 2ⁿ, où n = valeur d'un exposant de temps de suppression précédent.

9. Procédé selon la revendication 8, comprenant en outre l'étape suivante :
augmentation de n par incrémentation d'une unité pour chaque message entrant identique reçu dans le temps de mémorisation d'un message correspondant et après expiration d'un quelconque intervalle de suppression précédent.

10. Procédé selon la revendication 8, comprenant en outre l'étape suivante :
traitement de chaque message supprimé temporairement à un temps de sortie, où le temps de sortie = temps de l'évènement + 2n

11. Un système comprenant :
un module de surveillance comprenant un auditeur de message configuré pour la réception de messages depuis des modules surveillés ;
un module de suppression configuré pour déterminer l'éventuelle correspondance entre un message entrant et un quelconque message existant stocké dans le système de surveillance et pour augmenter un intervalle de suppression (SI) exponentiellement pour chaque message entrant identique reçu à un temps d'évènement qui se trouve dans une limite temporelle, où l'intervalle de suppression démarre lorsqu'un message est reçu la première fois et supprime un message identique reçu par la suite.

12. Système selon la revendication 11, dans lequel le message existant est stocké dans le module de surveillance pendant un temps de mémorisation.

13. Système selon la revendication 12, dans lequel le message existant est supprimé du stockage du module de surveillance une fois son temps de mémorisation écoulé.

14. Système *selon* la revendication 12, dans *lequel* la limite temporelle est définie comme étant comprise dans le temps de mémorisation d'un message précédent identique et après expiration d'un quelconque intervalle de suppression précédent.

15. Système selon la revendication 14 *dans lequel* tout message entrant reçu dans un intervalle de suppression non expiré est supprimé de manière permanente.
